(19)

Europäisches Patentamt
European Patent Office
Office européen des brevets

(11) **EP 3 604 256 B1**

(12) ## EUROPEAN PATENT SPECIFICATION

(45) Date of publication and mention
of the grant of the patent:
**10.06.2026 Bulletin 2026/24**

(21) Application number: **18847183.3**

(22) Date of filing: **30.07.2018**

(51) International Patent Classification (IPC):
**C04B 35/565** (2006.01)   **C04B 35/575** (2006.01)
**C04B 35/63** (2006.01)   **C04B 35/626** (2006.01)
**C04B 35/645** (2006.01)

(52) Cooperative Patent Classification (CPC):
**C04B 35/565; C04B 35/575; C04B 35/6261;**
**C04B 35/6263; C04B 35/62635; C04B 35/6264;**
**C04B 35/62655; C04B 35/645;** C04B 2235/3217;
C04B 2235/3224; C04B 2235/3225;
C04B 2235/3826; C04B 2235/383;
C04B 2235/3834; C04B 2235/422;   (Cont.)

(86) International application number:
**PCT/KR2018/008638**

(87) International publication number:
**WO 2019/231045 (05.12.2019 Gazette 2019/49)**

(54) **SILICON CARBIDE SINTERED BODY HAVING OXIDATION RESISTANCE LAYER, AND METHOD FOR PRODUCING SAME**

SILIZIUMCARBID-SINTERKÖRPER MIT OXIDATIONSBESTÄNDIGER SCHICHT UND VERFAHREN ZU SEINER HERSTELLUNG

CORPS FRITTÉ EN CARBURE DE SILICIUM AYANT UNE COUCHE DE RÉSISTANCE À L'OXYDATION, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2018 KR 20180062558**

(43) Date of publication of application:
**05.02.2020 Bulletin 2020/06**

(73) Proprietor: **Kepco Nuclear Fuel Co., Ltd**
**Daejeon 34057 (KR)**

(72) Inventors:
 • **LIM, Kwang-Young**
  **Yuseong-gu Daejeon 34048 (KR)**
 • **LEE, Seung-Jae**
  **Yuseong-gu Daejeon 34155 (KR)**
 • **NA, Yeon-Soo**
  **Yuseong-gu Daejeon 34071 (KR)**
 • **JUNG, Tae Sik**
  **Yuseong-gu Daejeon 34130 (KR)**

(74) Representative: **De Vries & Metman**
**Overschiestraat 180**
**1062 XK Amsterdam (NL)**

(56) References cited:
 WO-A2-2005/026075    JP-A- 2001 261 470
 KR-A- 20140 069 090    KR-A- 20160 083 194
 KR-B1- 101 698 378    KR-B1- 101 860 477

 • **HEE-JONG YEOM ET AL: "Electrical, thermal and mechanical properties of silicon carbide-silicon nitride composites sintered with yttria and scandia", JOURNAL OF THE EUROPEAN CERAMIC SOCIETY., vol. 35, no. 1, 1 January 2015 (2015-01-01), GB, pages 77 - 86, XP055684500, ISSN: 0955-2219, DOI: 10.1016/ j.jeurceramsoc.2014.08.011**

**(Cont. next page)**

- **YOUNG-WOOK KIM ET AL: "Microstructure and Thermal Conductivity of Silicon Carbide with Yttria and Scandia", JOURNAL OF THE AMERICAN CERAMIC SOCIETY., vol. 97, no. 3, 1 March 2014 (2014-03-01), US, pages 923 - 928, XP055684562, ISSN: 0002-7820, DOI: 10.1111/jace.12737**
- **CHO TAE-YOUNG ET AL: "Thermal, electrical, and mechanical properties of pressureless sintered silicon carbide ceramics with yttria-scandia-aluminum nitride", JOURNAL OF THE EUROPEAN CERAMIC SOCIETY, ELSEVIER SCIENCE PUBLISHERS, BARKING, ESSEX, GB, vol. 36, no. 11, 18 April 2016 (2016-04-18), pages 2659 - 2665, XP029534631, ISSN: 0955-2219, DOI: 10.1016/J.JEURCERAMSOC.2016.04.014**

(52) Cooperative Patent Classification (CPC): (Cont.)
C04B 2235/5445; C04B 2235/656; C04B 2235/658;
C04B 2235/661; C04B 2235/762; C04B 2235/767;
C04B 2235/77; C04B 2235/85; C04B 2235/9684

## Description

## Technical Field

The present invention relates to a silicon-carbide-sintered body, and more particularly to a silicon-carbide-sintered body having an oxidation-resistant layer on a surface thereof.

## Background Art

Silicon carbide materials are materials that desirably exhibit a melting point of 2700°C or higher, chemical stability, heat resistance, high thermal conductivity, and mechanical properties. Silicon carbide materials are materials that are highly usable not only in classical applications such as various fireproof plates, high-temperature ceramic filters, and high-temperature support fixtures, but also in special fields such as semiconductor parts, aerospace, and nuclear power.

Methods of sintering silicon carbide materials may be broadly classified into solid-state sintering and liquid-phase sintering. Liquid-phase sintering is a sintering method in which a liquid phase is formed through a reaction of Si oxide on the surface of silicon carbide grains with a sintering additive, so that the sintering temperature is greatly reduced compared to a sintering temperature of 2200°C or higher in solid-state sintering, diffusion of materials is facilitated through the liquid phase to thus facilitate sintering, and the microstructure, electrical resistance, thermal resistance, chemical resistance, and mechanical properties are relatively easily controlled through the liquid phase. In particular, an additive containing an Al element is typically used for sintering silicon carbide. In the case of the additive containing the Al element, the Si oxide formed on the surface of the silicon carbide material reacts with the added Al element in the atmosphere or in an atmosphere having a high oxygen potential at a temperature of 1400°C or higher, thereby forming a liquid phase on a surface portion. The liquid phase formed due to oxidation dissolves the grains at the surface of the sintered silicon carbide and penetrates into the silicon carbide. When the temperature is 1600°C or higher, the liquid phase boils and is discharged to the outside to thus form bubbles on the surface portion. The liquid phase is volatilized through a reaction of $SiO_2 + 2H_2O \rightarrow Si(OH)_4$, resulting in mass loss of the silicon carbide material. In the case of exposure to this condition for a long time, Si oxide is continuously formed on the surface of the silicon carbide and the liquid phase penetrates into the silicon carbide, so that the Al element located at a grain boundary and a triple point (junction) is continuously supplied to thus increase the content of the liquid phase.

Further, dissolution of the grains of the silicon carbide is further increased, and the boiling and the liquid phase volatilization occur at the same time, so that pores start to form in the surface. The formed pores form channels with each other, thus increasing a specific surface area and rapidly accelerating the oxidation and volatilization of the silicon carbide material. Such a corroded silicon carbide material cannot maintain the structural integrity thereof, and thus has a limitation in use at high temperatures over a long period of time. Therefore, for the high-temperature oxidation resistance of the silicon carbide, the addition of an Al element should be avoided as far as possible. There have been reported technologies for improving high-temperature oxidation resistance using a composite-type silicon carbide material. There has been reported a technology for manufacturing a composite of a boride material, such as $ZrB_2$ and $TiB_2$, which is called an ultra-high-temperature material, and a silicon carbide material, such as that disclosed in Korean Patent No. 10-1174627. However, there is still a disadvantage in that the liquid phase of an oxidation layer is volatilized at 1400°C or higher to thus rapidly reduce oxidation resistance. In order to overcome this limitation, there has been reported, in Korean Laid-Open Patent Application No. 10-2017-0104894, a technology of introducing a process for forming an EB (environmental barrier) coating layer on the outside of a silicon carbide material to prevent internal corrosion of silicon carbide. As the EB, rare-earth silicon oxides such as $Yb_2SiO_5$ and $Y_2SiO_5$ may be used, and the silicon carbide material may be coated with the EB, thus ensuring long-term durability even in an air or steam atmosphere at a high temperature of 1500°C or higher. However, there is a problem in that such an EB coating layer is not economical because it is necessary to synthesize refractory raw materials into nano-sized grains and to perform plasma spraying coating at ultra-high temperatures. Further, since the EB coating layer is a coating technology in which two-dimensional bonds are formed on the outer surface, there is a high possibility of peeling from a silicon carbide mother material due to the thermal shock caused by repeated temperature changes. Accordingly, there is a disadvantage in that the oxidation resistance of the silicon carbide material is not maintained after the peeling. Therefore, simply forming the EB coating layer by the plasma spraying coating cannot provide a complete solution for increasing the oxidation resistance of the silicon carbide material and continuously using the material, and is also inefficient in terms of economy.

Meanwhile, there has been proposed a method, such as Korean Patent Nos. 10-1178234 and 10-1308907, of sintering a silicon carbide material using an additive not containing an Al element. To be more specific, the method is a technology in which the silicon carbide material includes at least two constituent materials including different cations selected from among scandium nitrate, yttrium nitrate, lanthanum nitrate, praseodymium nitrate, neodymium nitrate, samarium nitrate, gadolinium nitrate, dysprosium nitrate, holmium nitrate, lutetium nitrate, and hydrates thereof as a sintering aid, so that a liquid-phase sintering temperature is reduced and densification is performed due to a eutectic phenomenon occurring in the ternary system or the multi-component system with $SiO_2$ on the surface of the silicon carbide. In the method, the content of at least two constituent materials including the different cations is 0.2 to 30 wt%. The silicon carbide material thus manufactured has a problem in that nitric acid is generated when nitrate and hydrates thereof are dissolved in a solvent such as ethanol and nitric acid gas is generated upon drying. As a sintering technology using rare-earth oxides without using nitrate, there has been proposed in Korean Patent No. 10-1698378 a technology for performing sintering at atmospheric pressure by adding AlN to $Sc_2O_3$ and $Y_2O_3$ oxides. However, it is essential to add an Al element in order to realize densification. The addition of AlN at a content of 1.5 vol% is helpful for densification. However, AlN is oxidized to $Al_2O_3$ during oxidation at high temperatures and reacts with $SiO_2$ to generate a liquid phase, which rapidly reduces the oxidation resistance of the silicon carbide material. Hee-Jong Yeom et al. and Young-Wook Kim et al. disclose a silicon carbide sintered with yttria and scandia.

In order to solve the above problems, a method of sintering a silicon carbide material using a rare-earth oxide additive that does not contain an Al element was reported by Kim et al. (Journal of American Ceramic Society vol. 97 No. 3 pp. 923-928, 2014). This is a technology in which an additive is added at a content of 1 vol% so that oxygen remaining in a silicon carbide lattice is removed to thus increase thermal conductivity. Content pertaining to high-temperature oxidation resistance is not set forth therein. Although the high-temperature oxidation resistance is improved to some extent due to the absence of Al, the crystal grain interface and the triple point after sintering are already stabilized into a $(Sc,Y)_2Si_2O_7$ phase. Accordingly, an EB layer is not formed on the surface of the silicon carbide during oxidation and the continuous generation of $SiO_2$ is not ensured. Therefore, there is a problem in that mass loss of the silicon carbide continuously occurs due to the boiling and volatilization on the surface, which hinders improvement in the high-temperature oxidation resistance. Further, since a sintering condition includes 40 MPa in a nitrogen atmosphere at 2050°C for 6 hours or more, there is a problem in that the sintering temperature and pressure are high, which is not economical in terms of commercial production.

## Documents of Related Art

[Prior Art Documents]

    1. Korean Patent No. 10-1174627 'A zirconium diboride-silicon carbide composite material and a method of manufacturing the same (2012.08.17.)'
    2. Korean Patent No. 10-1178234 'A composition for manufacturing silicon carbide ceramics containing at least one of yttrium nitrate and compounds thereof, silicon carbide ceramics, and a method of manufacturing the same (2012.08.23.)'
    3. Korean Patent No. 10-1308907 'A composition for manufacturing a low-resistant and high-thermal-conductivity beta-phase silicon carbide material, a silicon carbide material, and a method of manufacturing the material (2013.09.10.)'
    4. Korean Patent No. 10-1698378 'A silicon carbide ceramic and a method of manufacturing the same (2017.01.16.)'
    5. Korean Laid-Open Patent Application No. 10-2017-0104894 'A structure coated with an environmental barrier coating material and a method of applying the environmental barrier coating material (Application No. 10-2016-0027918)
    6. HEE-JONG YEOM ET AL: "Electrical, thermal and mechanical properties of silicon carbide-silicon nitride composites sintered with yttria and scandia",JOURNAL OF THE EUROPEAN CERAMIC SOCIETY., vol. 35, no. 1, 1 January 2015 (2015-01-01), pages 77-86, GB ISSN: 0955-2219, DOI: 10.1016/j.jeurceramsoc.2014.08.011,
    7. YOUNG-WOOK KIM ET AL: "Microstructure and Thermal Conductivity of Silicon Carbide with Yttria and Scandia",JOURNAL OF THE AMERICAN CERAMIC SOCIETY., vol. 97, no. 3, 1 March 2014 (2014-03-01), pages 923-928, US ISSN: 0002-7820, DOI: 10.1111/ jace.12737

## Disclosure

## Technical Problem

Accordingly, the present invention has been made keeping in mind the above problems occurring in the prior art, and an object of the present invention is to provide a silicon-carbide-sintered body and a method of manufacturing the same, in which sintering is feasible at a temperature of 1950°C or lower, and an EB layer including a rare-earth-Si oxide containing Sc and Y elements is formed on a surface thereof without an EB coating process and is also formed up to the inner region of a silicon carbide base, resulting in strong three-dimensional bonding, so that the possibility of peeling of the EB layer is reduced and a new EB layer is formed even when peeling occurs, greatly increasing the resistance to corrosion of a silicon carbide material caused by oxidation.

## Technical Solution

In order to accomplish the above object, the present invention provides a silicon-carbide-sintered body comprising:

    a secondary-phase oxidation protective layer formed on a surface thereof when the sintered body is exposed to an oxidation atmosphere, wherein

the secondary-phase oxidation protective layer includes a rare-earth-Si oxide,

cations of a rare earth are present in a rich phase at a triple point at which interfaces of crystal grains forming the sintered body meet each other, so that the cations of the rare earth and Si form a rare-earth-Si oxide even when the oxidation protective layer is peeled, thereby re-forming the oxidation protective layer,

the rare earth is Sc and Y, and

the rare earth forms an oxidation protective layer in a form of $(Sc,Y)_2SiO_7$ with cations of $SC_2O_3$ and $Y_2O_3$.

A secondary phase is preferably bonded to a base phase region from the surface of the sintered body to a predetermined depth in the base phase region in the sintered body.

In this case, the molar ratio of $Sc_2O_3$-$Y_2O_3$ is preferably 9 : 1 to 1 : 9.

In particular, the molar ratio of $Sc_2O_3$-$Y_2O_3$ is preferably 0.5 : 1 to 3.0 : 1.

In the sintered body, the relative density of an SSY is preferably 96.3% when the theoretical density of the SSY is 3.268 $g/cm^3$.

Meanwhile, a method of manufacturing a silicon-carbide-sintered body according to the present invention includes mixing silicon carbide and a sintering additive containing $Sc_2O_3$-$Y_2O_3$ in a solvent to form a slurry, drying the mixed slurry, sieving the dried slurry into a powder, and sintering the dried powder by pressurizing the dried powder, wherein the sintering further includes adding carbon in a state in which heating to 1400°C to 1500°C is performed without applying pressure and is maintained for a predetermined period of time before the dried powder is pressurized, so that an Si oxide on a surface of the silicon carbide is reduced to SiC to thus remove oxygen, whereby the finished sintered body and $Sc_2O_3$-$Y_2O_3$ form an oxidation coat layer.

In this case, the sintering is preferably performed in a non-oxidation atmosphere at a temperature of 1800 to 1950°C for 0.5 to 10 hours while pressurizing the dried powder at a pressure of 10 to 50 MPa. .

An amount of the carbon that is added is preferably 0.1 to 0.5 wt% based on a total amount of the powder. In addition, the silicon carbide preferably includes an $\alpha$ phase and a $\beta$ phase.

## Advantageous Effects

In a silicon-carbide-sintered body and a method of manufacturing the same according to the present invention, sintering is feasible at a temperature of 1950°C or lower, and an EB layer including a rare-earth-Si oxide containing Sc and Y elements is formed on the surface thereof without an EB coating process and is also formed up to the inner region of a silicon carbide base, resulting in strong three-dimensional bonding, so that the possibility of peeling of the EB layer is reduced and a new EB layer is formed even when peeling occurs, greatly increasing the resistance to corrosion of a silicon carbide material caused by oxidation. Since the temperature at which the silicon carbide material is used is increased by preventing the oxidation of the silicon carbide material, the mechanical integrity thereof is maintained over a very long period of time upon application to aerospace-related materials. Since the oxidation resistance is improved only by the sintering process without an additional coating process for forming the EB layer, the manufacturing cost thereof is remarkably reduced.

## Description of Drawings

FIG. 1 is a photograph showing the appearance of a specimen of a Comparative Example for comparison with an Example of the present invention, after high-temperature steam oxidation;

FIG. 2 is a photograph showing the appearance of the surface of a specimen according to the Example of the present invention, after high-temperature steam oxidation;

FIG. 3 is an XRD phase analysis graph of the surface of the specimen of FIG. 2;

FIG. 4 is an EDS analysis image of the surface of the specimen of FIG. 2;

FIG. 5 is a cross-sectional scanning electron microscope image of the EB layer formed on the surface of the specimen of FIG. 2;

FIG. 6 is a scanning electron microscope image and an EDS analysis image showing cross-sections of the EB layer formed on the surface of the specimen of FIG. 2 and a silicon carbide base phase beneath the EB layer; and

FIG. 7 is a scanning electron microscope image of the interface of the EB layer and the silicon carbide and the inner core of the silicon carbide in the specimen according to the Example of the present invention.

## Best Mode

It is to be understood that the specific structure or functional description presented in the embodiments of the present invention is illustrated for the purpose of describing the embodiments according to the concept of the present invention only, and the embodiments according to the concept of the present invention may be embodied in various forms. It should also be understood that the present invention should not be construed as being limited to the embodiments described herein, but includes all modifications, equivalents, and alternatives falling within the scope of the present invention defined in the appended claims 1-9.

Hereinafter, the present invention will be described in detail with reference to the accompanying drawings.

A silicon carbide material according to an embodiment of the present invention is manufactured by using silicon carbide grains and adding $Sc_2O_3$ and $Y_2O_3$ thereto as sintering additives. The silicon carbide is preferably $\alpha$ and $\beta$ phases.

The silicon carbide material preferably includes 85 to 98 vol% of the silicon carbide and 2 to 15 vol% of $Sc_2O_3$-$Y_2O_3$.

When the content of the silicon carbide is less than 85 vol%, there are disadvantages in that a liquid phase is not sufficiently formed due to the limited content of Si oxide present on the surface of the silicon carbide, and that since the viscosity of the liquid phase is increased, the diffusion rate of the silicon carbide is significantly reduced due to the liquid phase, thus reducing the sintering density to less than 96%. Further, when the content is more than 98 vol%, the liquid phase becomes insufficient, thus reducing the sintering density to less than 96%, which is undesirable.

Further, $Sc_2O_3$-$Y_2O_3$ of the present invention is characterized by being present at a molar ratio of 9 : 1 to 1 : 9. Even when the molar ratio deviates from the above-described range, similar EB layers, such as $Sc_2Si_2O_7$ and $Y_2Si_2O_5$, are formed, in addition to $(Sc,Y)_2Si_2O_7$, which enables a silicon carbide material coexisting with $(Sc,Y)_2Si_2O_7$ to be manufactured. However, the $Y_2Si_2O_5$ phase has a volatility possibility higher than that of the $(Sc,Y)_2Si_2O_7$ phase. In the case of the $Sc_2Si_2O_7$ phase, stability is excellent in an oxidation atmosphere at high temperatures, but when only an $Sc_2O_3$ additive is added, it is difficult to form a liquid phase due to the absence of a Y element during sintering, thus reducing the sintering density. Therefore, the inclusion of a large amount of Sc element is relatively advantageous in terms of high-temperature oxidation resistance. However, since the Y element for forming a liquid phase should be partially included, it is most preferable that a $Sc_2O_3$-$Y_2O_3$ molar ratio be 0.5 : 1 to 2.5 : 1 in order to increase sinterability through sufficient generation of a liquid phase and to form a stable $(Sc,Y)_2Si_2O_7$ phase at high temperatures. It is preferable that the content after mixing be 2 to 15 vol% based on the total composition in order to obtain a sintering density of 96% or more.

Further, cations of the constituent material added as the sintering additive are not solid-solved in a silicon carbide lattice but remain at the crystal grain interface and the triple point among the grains in a rich phase, causing a chemical reaction at high temperatures with the Si oxide generated on the surface during oxidation, which forms a coating layer as a $(Sc,Y)_2Si_2O_7$ phase. A large amount of Si oxide present on the surface of the silicon carbide powder used as a starting raw material acts as a supply source of Si and oxygen of the $(Sc,Y)_2Si_2O_7$ phase during sintering, and accordingly, limitation of the content thereof is essential. Therefore, in order to remove Si from the surface of the silicon carbide, a process for further adding a small amount of carbon of 0.1 to 0.5 wt% to thus remove oxygen of the Si oxide and reduce the Si oxide to Si carbide during sintering is indispensable. Further, in order to prevent further oxidation, it is preferable to use ethanol rather than water as a wet solvent.

According to the embodiment of the present invention, the relative density of the silicon carbide material is 96% or more.

Further, a method of manufacturing a silicon carbide material according to another embodiment of the present invention includes mixing silicon carbide and a $Sc_2O_3$-$Y_2O_3$ sintering additive in a solvent, drying a mixed slurry, and sintering a dried powder by pressurizing the dried powder.

In the present invention, first, the components included in the manufacture of the silicon carbide material are mixed in a solvent using SiC balls and polypropylene jars to thus form a slurry state. Then, the slurry may be dried, sieved, put into a graphite mold, and pressure-sintered to thus perform liquid phase sintering, thereby manufacturing the silicon carbide material.

In the sintering step, heating to 1450°C is performed without applying pressure, and is maintained at 1450°C for 10 minutes. This is a process for removing oxygen of the Si oxide from the surface of the silicon carbide and reducing the Si oxide to Si carbide by adding a small amount of carbon, which is essential for lowering the oxygen content. Further, this easily releases CO or $CO_2$ gas that is additionally generated so as to prevent the formation of residual pores during the sintering. As a result of repeated experimentation, it is understood that the temperature of the process for lowering the oxygen content through the addition of carbon is optimized at about 1400°C to 1500°C, and temperatures within ranges adjacent thereto are acceptable.

It is preferable that the sintering be performed in a non-oxidation atmosphere at a temperature of 1800 to 1950°C for 0.5 to 10 hours while applying a pressure of 10 to 50 MPa from a temperature of 1450°C or higher and that the non-oxidation atmosphere be a nitrogen or argon gas atmosphere.

The present invention also provides a silicon carbide material which is manufactured using the above method and in which cations of the constituent material including the silicon carbide base phase and the sintering additive added thereto are not solid-solved in a silicon carbide lattice but are present at the crystal grain interface and the triple point among the silicon carbide grains.

Example 1.

$\beta$-SiC (~0.5 $\mu$m, BF-17, H.C. Starck, Berlin, Germany), $Y_2O_3$ (99.99%, Kojundo Chemical Lab Co., Ltd., Sakado-shi, Japan), and $Sc_2O_3$ (99.99%, Kojundo Chemical Lab Co., Ltd., Sakado-shi, Japan) were used as starting materials.

0.3 wt% of carbon was additionally mixed with a powder including 95 vol% of $\beta$-SiC and 5 vol% of

$Sc_2O_3$-$Y_2O_3$ mixed at a molar ratio of 2 : 1 using SiC balls and polypropylene jars in ethanol for 24 hours to obtain a mixture. The milled slurry was dried, sieved, put into a graphite mold, and maintained at 1450°C for 20 minutes. Sintering was then performed in a nitrogen atmosphere at 1900°C for 1 hour while a pressure of 30 MPa was applied, thus manufacturing a silicon carbide ceramic (hereinafter, referred to as "SSY").

Experimental Example 1: Measurement of relative density

The density of the SSY manufactured according to Example 1 was obtained using an Archimedes method, and the relative density was obtained using 3.268 $g/cm^3$ as the theoretical density of the SSY.
The relative density of the SSY according to Example 1 was 96.3%.

Comparative Example.

For comparison with Example 1, a silicon-carbide-sintered body to which 5 vol% of an $Al_2O_3$-$Y_2O_3$ additive was added at a molar ratio of 1 : 1 was manufactured using the same manufacturing process (molding and sintering) as in the Example.

Experimental Example 2: high-temperature steam oxidation

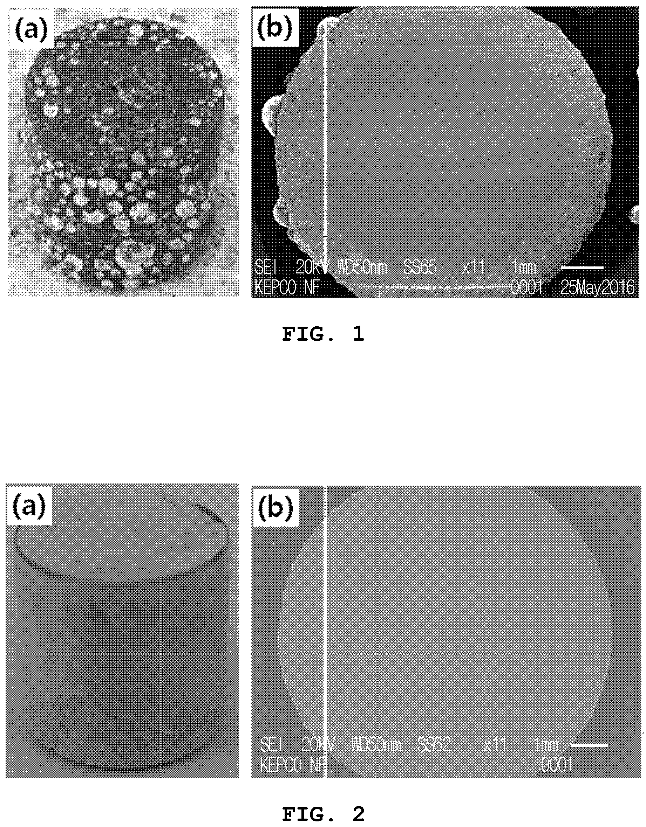

The silicon carbide materials manufactured according to Example 1 and Comparative Example 1 were exposed to a steam flow rate condition of 200 cm/s at 1700°C for 25 hours to thus perform high-temperature steam oxidation, and photographs of the appearance and cross-section of the specimen after the high-temperature steam oxidation are shown in FIGS. 1 and 2. The flow rate (v) of steam was calculated using the following Equation 1.

[Equation 1]

$$v = \frac{RT}{pAM} \frac{dm}{dt}$$

v is the flow rate of steam, R is a gas constant, T is the temperature, p is the pressure, A is the vessel cross-sectional area, M is the molar mass of water, and dm/dt is the rate at which water at room temperature is injected into a steam generator.
Referring to FIG. 1, it can be seen that, in the case of the silicon carbide material manufactured according to the Comparative Example, the Si oxide on the outer surface due to oxidation and the liquid phase generated due to the $Al_2O_3$-$Y_2O_3$ additive caused bubbling and melted inner silicon carbide grains due to the absence of a secondary phase, enabling erosion traces to appear.
Referring to FIG. 2, it can be confirmed that, due to the formation of the secondary phase covering the outer surface of the silicon carbide material manufactured according to the Example, an oxidation coat delayed additional corrosion, thereby protecting an inner base phase without internal erosion caused by oxidation.

Experimental Example 3:

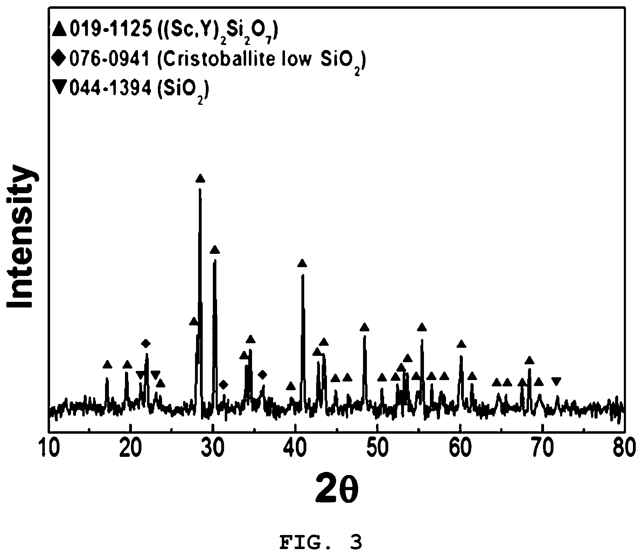

The phase analysis of the surface of the silicon carbide material subjected to the high-temperature steam oxidation of Experimental Example 2 was performed using an XRD with respect to Example 1, and the results are shown in FIG. 3.
Referring to FIG. 3, it was confirmed that the layer formed on the surface portion mainly included a (Sc, $Y)_2Si_2O_7$ phase (JCPDS No. 019-1125) and also included some cristoballite low $SiO_2$ phases (JCPDS No. 076-0941) remaining without forming a secondary phase and a small amount of $SiO_2$ phase (JCPDS No. 044-1394). Accordingly, the Sc and Y elements that are present at the silicon carbide grain boundary and triple point in a rich state come into contact with the $SiO_2$ generated due to the oxidation on the surface of the silicon carbide, so that a chemical reaction occurs to thus match a stoichiometric ratio, thereby generating a $(Sc,Y)_2Si_2O_7$ phase. The $SiO_2$ phase may be effectively removed to thus suppress bubbling due to the Si oxide and the generation of additional $SiO_2$.

Experimental Example 4: Surface microstructure and EDS (energy dispersive X-ray spectroscopy) analysis

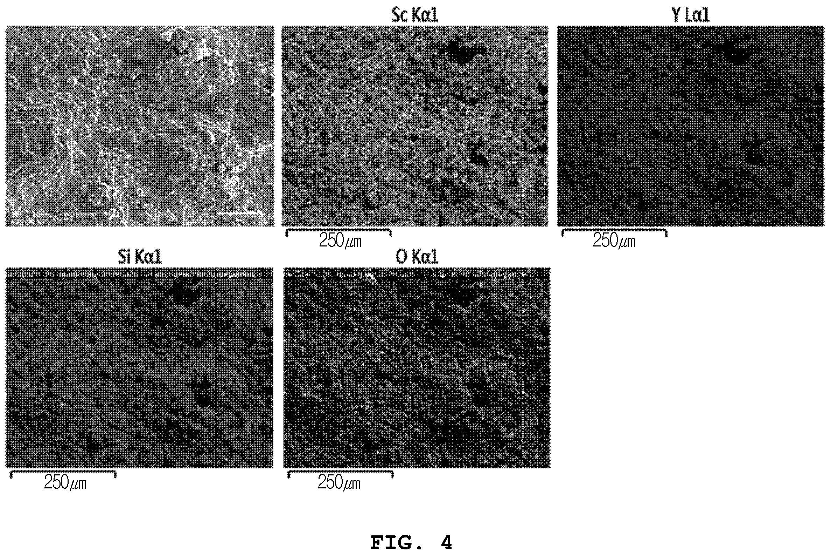

The surface of the specimen subjected to the high-temperature steam oxidation of Experimental Example 2 was observed with respect to Example 1, and the result of elemental distribution is shown in FIG. 4 through the EDS analysis of the observed region.
Next, referring to FIG. 4, it can be confirmed that the surface portion of the silicon carbide material after the high-temperature steam oxidation included Sc, Y, Si, and O elements, and that the elements were uniformly distributed therethrough. Accordingly, it can be seen that the silicon carbide was oxidized to thus form a secondary phase. Further, it can be confirmed that the secondary phase grains formed on the surface portion were sintered at high temperatures to thus be densified. Further, it can be confirmed that the surface portion was homogeneous without bubbling and large pores due to the absence of a large amount of liquid phase.

Experimental Example 5: Cross-section microstructure analysis

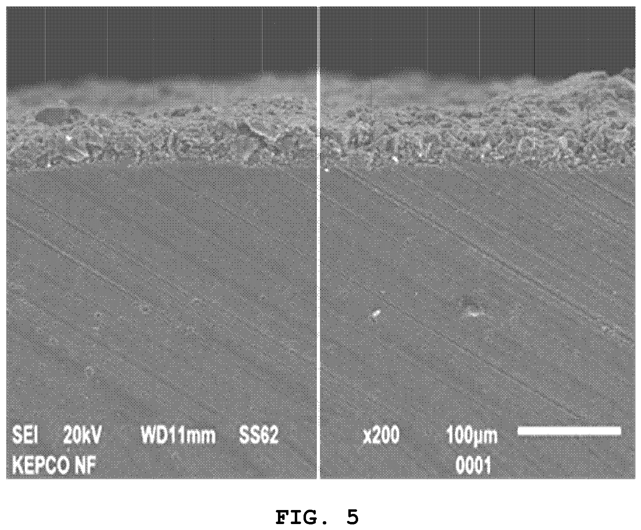

The cross-section of the EB layer formed on the silicon carbide material subjected to the high-temperature steam oxidation of Experimental Example 2 was observed using a scanning electron microscope with respect to Example 1, and the results are shown in FIG. 5.

Referring to FIG. 5, it can be confirmed that the EB layer formed on the surface portion of the silicon carbide was homogeneous in thickness and densely formed and that the integrity was ensured without an erosion phenomenon caused by corrosion on the silicon carbide base phase. Accordingly, the EB layer formed on the outer surface of the silicon carbide may effectively prevent the formation of pore channels due to the formation of Si oxide and bubbling in a continuous oxidation atmosphere, thereby preventing corrosion and erosion from accelerating, whereby the oxidation resistance of the SiC base phase is significantly increased.

Experimental Example 6: Cross-section microstructure and EDS (energy dispersive X-ray spectroscopy) analysis

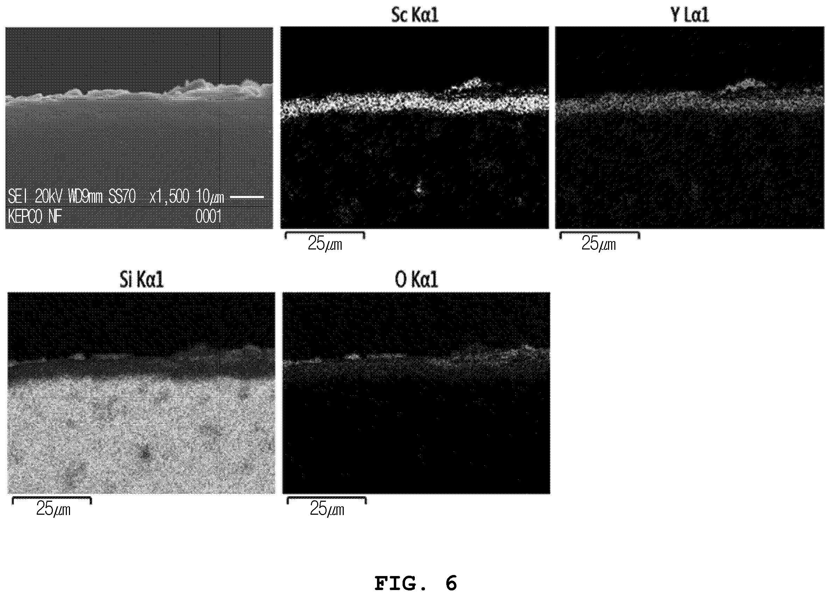

The cross-sections of the EB layer formed on the silicon carbide material subjected to the high-temperature steam oxidation of Experimental Example 2 and the silicon carbide base phase were observed using a scanning microscope and were subjected to elemental distribution analysis using EDS (energy dispersive X-ray spectroscopy) with respect to Example 1, and the results are shown in FIG. 6.

Referring to FIG. 6, in the EDS mapping, a portion where a color appears is a portion where an element is present, and a black portion represents a portion where an element is not present. The elements of the EB layer formed on the outer surface layer include Sc, Y, Si, and O in the same manner as shown in FIG. 4. Sc and Y elements that are present at a triple point and the Si element of silicon carbide were present in the silicon carbide base phase, and no signs of penetration of an oxygen element were observed. This indicates that the silicon carbide base phase was completely protected from oxygen even under oxidation conditions.

Experimental Example 7: Analysis of microstructure of interface of EB layer and silicon carbide

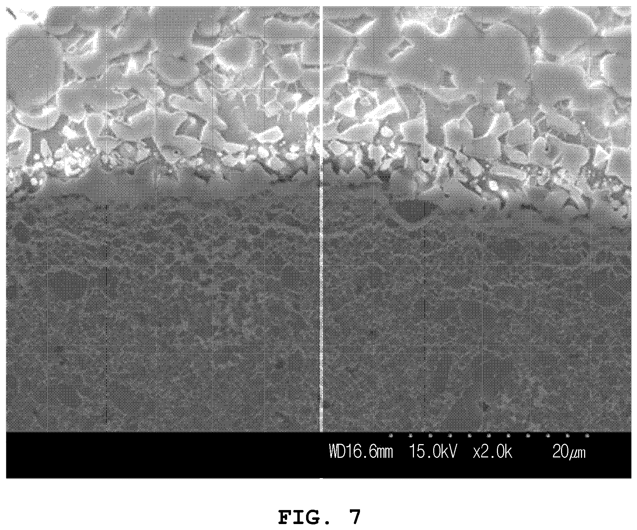

The cross-section of the silicon carbide material subjected to the high-temperature steam oxidation of Experimental Example 2 was plasma-etched using $CF_4$ gas with respect to Example 1, the interface of the EB layer and the silicon carbide and the inner core of the silicon carbide were observed using a scanning microscope, and the results of observation are shown in FIG. 7.

FIG. 7 shows the microstructure of the interface of the EB layer and the silicon carbide, and it can be confirmed that strong bonding occurred at the interface of the EB layer and the silicon carbide. It can be also confirmed that a large amount of secondary phase was mixed with silicon carbide grains from the EB layer to a depth of about 20 $\mu$m of the inner base phase of the silicon carbide. This shows that the EB layer is not bonded only on the surface of the silicon carbide in a two-dimensional manner but is formed up to the inner region of the silicon carbide base, so that a relatively strong three-dimensional bonding structure is ensured, thereby relatively greatly reducing the possibility of peeling compared to two-dimensional bonding using an EB coating process. It also shows that the secondary phases additionally form an EB layer on the outer surface even when the EB layer is removed under a continuous oxidation condition, thereby continuously maintaining the EB layer, which maintains the corrosion resistance of the silicon carbide material.

While the present invention has been described with reference to exemplary embodiments, it will be apparent to those skilled in the art that the invention is not limited to the disclosed exemplary embodiments and the accompanying drawings, but, on the contrary, is intended to cover various substitutions, variations, and modifications falling within the scope of the present invention defined in the appended claims 1-9.

**Claims**

1. A silicon-carbide-sintered body comprising:

   a secondary-phase oxidation protective layer formed on a surface thereof when the sintered body is exposed to an oxidation atmosphere, wherein
   the secondary-phase oxidation protective layer includes a rare-earth-Si oxide,
   cations of a rare earth are present in a rich phase at a triple point at which interfaces of crystal grains forming the sintered body meet each other, so that the cations of the rare earth and Si form a rare-earth-Si oxide even when the oxidation protective layer is peeled, thereby re-forming the oxidation protective layer,
   the rare earth is Sc and Y, and
   the rare earth forms an oxidation protective layer in a form of $(Sc,Y)_2SiO_7$ with cations of $Sc_2O_3$ and $Y_2O_3$.

2. The silicon-carbide-sintered body of claim 1, wherein the secondary phase is bonded to a base phase region from a surface of the sintered body to a predetermined depth in the base phase region in the sintered body.

3. The silicon-carbide-sintered body of claim 1 or 2, wherein a molar ratio of $Sc_2O_3$-$Y_2O_3$ is 9 : 1 to 1 : 9.

4. The silicon-carbide-sintered body of any one of the preceding claims, wherein a molar ratio of $Sc_2O_3$-$Y_2O_3$ is 0.5 : 1 to 3.0 : 1.

**5.** The silicon-carbide-sintered body of any one of the preceding claims, wherein a relative density of the silicon-carbide sintered body is 96.3% obtained using an Archimedes method using 3.268 g/cm$^3$ as the theoretical density of the silicon-carbide sintered body.

**6.** A method of manufacturing a silicon-carbide-sintered body, the method comprising:

mixing silicon carbide and a sintering additive containing $Sc_2O_3$-$_2O_3$ in a solvent to form a slurry;
drying the mixed slurry;
sieving the dried slurry into a powder; and
sintering the dried powder by pressurizing the dried powder, wherein
the sintering further includes adding carbon in a state in which heating to 1400°C to 1500°C is performed without applying pressure and is maintained for a predetermined period of time before the dried powder is pressurized, so that an Si oxide on a surface of the silicon carbide is reduced to SiC to thus remove oxygen, whereby the finished sintered body and $Sc_2O_3$-$Y_2O_3$ form an oxidation coat layer.

**7.** The method of claim 6, wherein the sintering is performed in a non-oxidation atmosphere at a temperature of 1800 to 1950°C for 0.5 to 10 hours while pressurizing the dried powder at a pressure of 10 to 50 MPa.

**8.** The method of claim 6 or 7, wherein an amount of the carbon that is added is 0.1 to 0.5 wt% based on a total amount of the powder.

**9.** The method of claim 6, 7, or 8, wherein the silicon carbide includes an $\alpha$ phase and a $\beta$ phase.

**Patentansprüche**

**1.** Ein Siliziumcarbid-Sinterkörper, umfassend:

eine Sekundärphasen-Oxidationsschutzschicht, die auf einer Oberfläche davon gebildet ist, wenn der Sinterkörper einer Oxidationsatmosphäre ausgesetzt ist, wobei die Sekundärphasen-Oxidationsschutzschicht ein Seltenerd-Si-Oxid beinhaltet,
Kationen einer Seltenen Erde, die in einer reichen Phase an einem Tripelpunkt vorliegen, an dem sich die Grenzflächen der Kristallkörner, die den Sinterkörper bilden, treffen, so dass die Kationen der Seltenen Erde und Si ein Seltenerd-Si-Oxid bilden, selbst wenn die Oxidationsschutzschicht abgezogen wird, wodurch die Oxidationsschutzschicht wieder gebildet wird,
die Seltene Erde Sc und Y ist, und
die Seltene Erde eine Oxidationsschutzschicht in Form von $(Sc, Y)_2SiO_7$ mit Kationen von $Sc_2O_3$ und $Y_2O_3$ bildet.

**2.** Der Siliziumcarbid-Sinterkörper gemäß Anspruch 1, wobei die Sekundärphase an einen Grundphasenbereich, von einer Oberfläche des Sinterkörpers bis zu einer vorbestimmten Tiefe im Grundphasenbereich des Sinterkörpers, gebunden ist.

**3.** Der Siliziumcarbid-Sinterkörper gemäß Anspruch 1 oder 2, wobei ein Molverhältnis von $Sc_2O_3$ - $Y_2O_3$ 9 : 1 bis 1 : 9 beträgt.

**4.** Der Siliziumcarbid-Sinterkörper gemäß einem der vorstehenden Ansprüche, wobei ein Molverhältnis von $Sc_2O_3$ - $Y_2O_3$ 0,5 : 1 bis 3,0 : 1 beträgt.

**5.** Der Siliziumcarbid-Sinterkörper gemäß einem der vorstehenden Ansprüche, wobei die relative Dichte des Siliziumcarbid-Sinterkörpers 96,3 % beträgt, ermittelt unter Verwendung der Archimedes-Methode, unter Verwendung einer theoretischen Dichte des Siliziumcarbid-Sinterkörpers von 3,268 g/cm$^3$.

**6.** Ein Verfahren zur Herstellung eines Siliziumcarbid-Sinterkörpers, wobei das Verfahren umfasst:

Mischen von Siliziumcarbid und einem Sinteradditiv, das $Sc_2O_3$-$Y_2O_3$ enthält, in einem Lösungsmittel, um eine Aufschlämmung zu bilden;
Trocknen der gemischten Aufschlämmung;
Sieben der getrockneten Aufschlämmung zu einem Pulver; und
Sintern des getrockneten Pulvers durch Druckbeaufschlagen des getrockneten Pulvers, wobei
das Sintern ferner das Hinzufügen von Kohlenstoff in einem Zustand umfasst, in dem ein Erwärmen auf 1400 °C bis 1500 °C ohne Druckbeaufschlagen durchgeführt und für einen vorbestimmten Zeitraum aufrechterhalten wird, bevor das getrocknete Pulver druckbeaufschlagt wird, so dass ein Si-Oxid auf einer Oberfläche des Siliziumcarbids zu SiC reduziert wird, um so Sauerstoff zu entfernen, wodurch der fertige Sinterkörper und $Sc_2O_3$-$Y_2O_3$ eine Oxidationsschicht bilden.

**7.** Das Verfahren gemäß Anspruch 6, wobei das Sintern in einer nicht-Oxidationsatmosphäre bei einer Temperatur von 1800 bis 1950 °C für 0,5 bis 10 Stunden durchgeführt wird, während das getrocknete Pulver mit einem Druck von 10 bis 50 MPa druckbeaufschlagt wird.

**8.** Das Verfahren gemäß Anspruch 6 oder 7, wobei eine Menge des zugesetzten Kohlenstoffs 0,1 bis 0,5 Gew.-% beträgt, bezogen auf die Gesamtmenge des Pulvers.

**9.** Das Verfahren gemäß Anspruch 6, 7 oder 8, wobei das Siliziumcarbid eine $\alpha$-Phase und eine $\beta$-Phase enthält.

**Revendications**

**1.** Corps fritté en carbure de silicium comprenant :

une couche protectrice d'oxydation en phase secondaire formée sur une surface de celui-ci lorsque le corps fritté est exposé à une atmosphère d'oxydation, dans lequel
la couche protectrice d'oxydation de phase secondaire comporte un oxyde de Si-terre rare, des cations d'une terre rare sont présents en phase riche à un triple point où des interfaces de grains de cristal formant le corps fritté se rencontrent, de sorte que les cations de la terre rare et du Si forment un oxyde de Si-terre rare même lorsque la couche protectrice d'oxydation est décollée, reformant ainsi la couche protectrice d'oxydation,
la terre rare est Sc et Y, et
la terre rare forme une couche protectrice d'oxydation sous forme de $(Sc,Y)_2SiO_7$ avec des cations de $Sc_2O_3$ et $Y_2O_3$.

**2.** Corps fritté en carbure de silicium selon la revendication 1, dans lequel la phase secondaire est liée à une région de phase de base à partir d'une surface du corps fritté à une profondeur prédéterminée dans la région de phase de base dans le corps fritté.

**3.** Corps fritté en carbure de silicium selon la revendication 1 ou 2, dans lequel un rapport molaire du $Sc_2O_3$-$Y_2O_3$ est de 9: 1 à 1: 9.

**4.** Corps fritté en carbure de silicium selon l'une quelconque des revendications précédentes, dans lequel un rapport molaire du $Sc_2O_3$-$Y_2O_3$ est de 0,5: 1 à 3,0: 1.

**5.** Corps fritté en carbure de silicium selon l'une quelconque des revendications précédentes, dans lequel une densité relative du corps fritté en carbure de silicium est de 96,3 % obtenue à l'aide d'un procédé d'Archimède utilisant 3,268 $g/cm^3$ comme densité théorique du corps fritté en carbure de silicium.

**6.** Procédé de fabrication d'un corps fritté en carbure de silicium, le procédé comprenant :

le mélange du carbure de silicium et d'un additif de frittage contenant du $SC_2O_3$-$Y_2O_3$ dans un solvant pour former une suspension ;
le séchage de la suspension mélangée ;
le tamisage de la suspension séchée en poudre ; et
le frittage de la poudre séchée par pressurisation de la poudre séchée, dans lequel
le frittage comporte en outre l'ajout de carbone dans un état dans lequel le chauffage à 1400 °C à 1500 °C est réalisé sans appliquer de pression et est maintenu pendant une période de temps prédéterminée avant que la poudre séchée ne soit pressurisée, de sorte qu'un oxyde de Si sur une surface du carbure de silicium soit réduit en SiC pour ainsi éliminer l'oxygène, le corps fritté fini et le $SC_2O_3$-$Y_2O_3$ formant une couche de revêtement d'oxydation.

**7.** Procédé selon la revendication 6, dans lequel le frittage est réalisé dans une atmosphère non oxydante à une température de 1800 à 1950 °C pendant 0,5 à 10 heures tout en pressurisant la poudre séchée à une pression de 10 à 50 MPa.

**8.** Procédé selon la revendication 6 ou 7, dans lequel une quantité de carbone qui est ajoutée est de 0,1 à 0,5 % en poids sur la base d'une quantité totale de la poudre.

**9.** Procédé selon la revendication 6, 7 ou 8, dans lequel le carbure de silicium inclut une phase $\alpha$ et une phase $\beta$.

FIG. 1

FIG. 2

FIG. 3

FIG. 4

**FIG. 5**

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101174627
- KR 1020170104894
- KR 101178234
- KR 101308907
- KR 101698378
- KR 1020160027918

**Non-patent literature cited in the description**

- **KIM et al.** *Journal of American Ceramic Society*, 2014, vol. 97 (3), 923-928
- **HEE-JONG YEOM et al.** Electrical, thermal and mechanical properties of silicon carbide-silicon nitride composites sintered with yttria and scandia. *JOURNAL OF THE EUROPEAN CERAMIC SOCIETY.*, 01 January 2015, vol. 35 (1), ISSN 0955-2219, 77-86
- **YOUNG-WOOK KIM et al.** Microstructure and Thermal Conductivity of Silicon Carbide with Yttria and Scandia. *JOURNAL OF THE AMERICAN CERAMIC SOCIETY*, 01 March 2014, vol. 97 (3), ISSN 0002-7820, 923-928